# NEUE EUROPÄISCHE PATENTSCHRIFT

(11) **EP 2 067 638 B2**
(45) Veröffentlichungstag und Bekanntmachung des Hinweises auf die Entscheidung über den Einspruch: **25.05.2016**
(45) Hinweis auf die Patenterteilung: 18.08.2010
(21) Anmeldenummer: 09155521.9
(22) Anmeldetag: 18.04.2006
(51) Int. Cl.: B60G 17/052

(54) **Schaltventil für Anlagen zum Heben und Senken eines Fahrzeugaufbaus**
Switching valve for raising and lowering a vehicle body
Vanne de commutation pour soulever et baisser une carrosserie de véhicule

(30) Priorität: 16.04.2005 DE 102005017590; 13.04.2006 DE 102006017890
(43) Veröffentlichungstag der Anmeldung: 10.06.2009
(62) Teilanmeldung aus: 06007972.0
(73) Patentinhaber: Haldex Brake Products GmbH, 69123 Heidelberg (DE)
(72) Erfinder: Tschöke, Tobias, 69121 Heidelberg (DE); Becke, Stefan, 68804 Altlussheim (DE); Sulzyc, Georg, 68535 Edingen-Neckarhausen (DE)
(74) Vertreter: REHBERG HÜPPE + PARTNER

(56) Entgegenhaltungen:
- EP-A- 0 188 706
- EP-A- 1 039 147
- EP-A2- 0 398 008
- EP-B1- 0 536 124
- WO-A-91/07291
- WO-A-92/12021
- WO-A1-2007/093251
- DE-A1- 2 510 954
- DE-A1- 2 510 954
- DE-A1- 2 623 235
- DE-B4- 2006 006 439
- DE-C1- 4 120 824
- DE-C1- 10 129 143
- DE-C1- 19 913 380
- DE-C1- 19 944 873
- FR-A- 2 733 942

## Beschreibung

### TECHNISCHES GEBIET DER ERFINDUNG

Die Erfindung betrifft eine Verwendung eine manuell betätigbaren pneumatischen Schaltventils für Anlagen zum Heben und Senken eines Fahrzeugaufbaus.

### STAND DER TECHNIK

Manuell betätigbare pneumatische Schaltventile der hier angesprochenen Art werden eingesetzt für Anlagen zum Heben und Senken eines Fahrzeugaufbaus von luftgefederten Fahrzeugen. Ein derartiges Schaltventil besitzt ein mechanisches Bedienelement, über das ein Steuerelement, wie beispielsweise ein Steuerkolben, in unterschiedliche Stellungen HEBEN, SENKEN, FAHRT und STOP, verbracht werden kann. Über den Steuerkolben werden in den unterschiedlichen genannten Stellungen für zumindest einen Luftfederkreis-lauf je ein Einlassventil, ein Auslassventil und ggf. ein Sperrventil, beispielsweise in Stößelbauart, betätigt. Hierbei kann ein Sperrventil an eine von einem Niveauregelventil herangeführte Leitung angeschlossen sein.

Nach dem Loslassen des Bedienelements und für ein Indizieren einer Betriebsbedingung FAHRT kann ein Rückführen von Bedienelement und Steuerelement übereine Federanordnung, insbesondere eine Torsionsfeder, oder über exzentrisch über das Steuerelement einwirkende federbelastete Stößel von Einlassventil oder Auslassventil in die Stellung STOP erfolgen. Weiterhin kann durch eine Druckbeaufschlagung einer Steuerfläche des Steuerelements eine automatisierte Überführung des Steuerelements von der Stellung STOP in die Stellung FAHRT erfolgen.

Bei dem Bedienelement handelt es sich üblicherweise um einen Drehgriff oder Drehknopf, der in einer Axialstellung STOP zwischen Schwenkstellungen HEBEN, SENKEN und NEUTRAL verschwenkbar ist, sowie über eine Axialbewegung von der Stellung STOP in die Stellung FAHRT überführbar ist. Ein pneumatisches automatisches Überführen von der Stellung STOP in die Stellung FAHRT ist bei Indikation einer Fahrsituation erforderlich, um ein willkürliches Heben und/oder Senken des Fahrzeugaufbaus während einer Fahrt zu unterbinden. Gleichzeitig soll während einer Fahrsituation über das Schaltventil eine Einwirkung eines Niveauregelventils auf die Luftfederelemente möglich sein.

Ein pneumatisches Schaltventil der eingangs beschriebenen Art ist beispielsweise aus DE 41 20 824 C1 bekannt Das Schaltventil weist einen Steuerkolben auf, der eine Nockenfläche besitzt, mit welcher der Stößel eines Sperrventils durch Axialverschiebung des Steuerkolbens betätigt werden kann. Insoweit ist ein Schalten aus der Stellung STOP in die Stellung FAHRT und umgekehrt möglich. Mit dem Steuerkolben sind Nokkenscheiben axial verschiebbar, jedoch drehfest gekuppelt, wobei die Nockenscheiben Nockenflächen zur Betätigung eines Einlassventils und eines Aüslassventils aufweisen. Für jeden Luftfederkreis ist jeweils eine Satz von drei derartigen Ventilen, nämlich ein Einlassventil, ein Auslassventil und ein Sperrventil, vorgesehen. Dem Steuerkolben ist eine Hülse als weiteres Bauteil zugeordnet, die einerseits mit dem Steuerkolben und andererseits mit dem Bedienelement drehfest verbunden ist Weiterhin ist eine Federanordnung vorgesehen, die auf die Hülse und über die Hülse auf den Steuerkolben einwirkt, um eine automatische Rückführung aus der Stellung HEBEN oder SENKEN in die Stellung STOP zu bewirken, sobald das Bedienungselement losgelassen wird, wie dies üblicherweise nach einem Hebe- oder Senkvorgang der Fall ist. Die Betätigungsachsen derdrei Ventile eines Satzes für einen Luftfederkreis sind in einer gemeinsamen Ebene angeordnet, die die Längsachse des Schaltventils bzw. des Schaltkolbens schneidet Auf diese Art und Weise können auch Ventilgruppen fürmehrere Luftfederkreise über den Umfang verteilt angeordnet werden. Es ist auch eine Drehbehinderung für die Verhinderung einer Verdrehung des Schaltkolbens in der Stellung FAHRT vorgesehen. Der Steuerkolben ist durch Druckluft, insbesondere Druckluftimpulse, axial verschiebbar im Gehäuse des Schaltventils gelagert, um sicherzustellen, dass im Fahrbetrieb die Stellung FAHRT eingenommen wird.

Aus der DE-OS 25 10 954 ist ein Schaltventil für die Stellungen HEBEN, SENKEN, FAHRT und STOP bekannt. Bei diesem Schaltventil sind die dem einzelnen Luftfederkreis zugeordneten Ventile nicht in Stößelbauart, sondern in Schieberbauart verwirklicht. Es ist ein gesonderter Steuerkolben vorgesehen, der mit Druckluft beaufschlagt ist, so dass dieses Schaltventil über Druckluft in die Stellung FAHRT verstellt werden kann. Die beiden Ventilschieber sind mit ihren Achsen parallel zueinander angeordnet. Es sind Rückführfedem für die Schieber vorgesehen, die eine Rückführung des Schaltventils in die Stellung STOP bewirken, sobald das mechanische Bedienelement losgelassen wird.

Schließlich ist aus DE 101 29 143 C1 bekannt, dass Stößel eines Einlassventils sowie eines Auslassventils koaxial zueinander, aber exzentrisch zur Längsachse eines Steuerkolbens auf einen Nocken des Steuerkolbens einwirken. Bei einer Verschwenkung des Steuerkolbens in eine Stellung HEBEN oder SENKEN wird die dem Einlassventil oder Auslassventil zugeordnete Feder derart vorgespannt, dass der Stößel des Einlassventils oder Auslassventils mit dem Hebelarm seines exzentrischen Kontaktpunkts auf dem Nocken ein Rückstellmoment erzeugt, welches für ein Loslassen des Bedienelements für ein Rückführen des Bedienelements mit Steuerkolben in eine Stellung NEUTRAL sorgt.

DE 26 23 235 A1 offenbart ein manuell betätigbares Schaltventil, welches zwischen ein Luftfederungsventil und einen Luftfederbalg zwischengeschaltet ist Das Schaltventil besitzt drei Arbeitsstellungen, nämlicheine Stellung FAHRT, eine Stellung HEBEN und eine Stellung SENKEN. Zur Vorgabe der Arbeitsstellungen durch den Benutzer ist ein Hebel vorgesehen, welcher bei Verschwenkung auf einer Kreisbahn mit einem Schnappteil entlang einer Rastierkurve bewegt wird. Die Rastierkurve schlängelt sich ungefähr sinusförmig entlang einer Kreisbahn. Raststellungen des Hebels sind jeweils in Minima des sinusförmigen Verlaufs vorgesehen, wobei zwischen den Arbeitsstellungen FAHRT und HEBEN sowie SENKEN jeweils zwei Maxima vorgesehen sind sowie ein weiteres Minimum. Für ein Verschwenken des Hebels aus einer Stellung FAHRT um 30° in den Bereich eines benachbarten Minimums erfolgt eine Schließung sämtlicher Ventile, während eine Weiterbewegung um weitere 30°, also insgesamt 60° von der Stellung FAHRT in die Stellung HEBEN/SENKEN, ein Ventil zum Heben oder. Senken geöffnet wird. Ist ein Fahrzeugrahmen um ein gewünschtes Maß angehoben oder abgesenkt, kann der Hebel manuell wieder in eine Stellung FAHRT bzw. STOP gebracht werden.

WO 91/06440 offenbart ein Luftfederungssystem, bei dem für den Fall, dass es ein Fahrer versäumt, nach Beendigung eines Hebe- oder Senkbetriebs eine Ventilgruppe in einen Zustand FAHRT zurückzuführen, mit erstmaliger Betätigung einer Betriebsbremse auto-matisiert ein Ventil in einem mit einem Zustand FAHRT korrespondierenden Zustand rückgeführt wird.

Die Druckschrift DE 10 2006 006439 B4, welche nach dem Prioritätstag der vorliegenden Patentanmeldung eingereicht worden ist, offenbart eine Verriegelung eines Schaltventils in einer Stellung Senken. Die Verriegelung des Schaltventils in der Stellung Senken kann bei Anlegen eines elektrischen oder pneumatischen Signals automatisch aufgehoben werden, wodurch eine Rückstellung des Bedienelements in eine Stellung Fahrt ermöglichtwerden soll. Das in dergenannten Druckschrift offenbarte Schaltventil ist lediglich für eine einkreisige Luftfederungsanlage geeignet.

Aus FR 2 733 942 ist ein manuell betätigbares pneumatisches Schaltventil bekannt, welches eine "normale* Stellung besitzt, die im Fahrzustand des Fahrzeugs genutzt wird und in der ein freier Ausschlag der Achsen ohne Beschädigung derverschiedenen Elemente der Struktur des Fahrzeugs erlaubt ist. Weiterhin sind Stellungen "Tief' und 'Hoch' vorhanden, die bei einer Be- und Entladung im Bereich einer Laderampe genutzt werden. Ohne dass dies explizit in der Druckschrift angesprochen ist, scheinen die Stellungen "Tief' und "Hoch" stabile Stellungen darzustellen, die auch ohne manuelles Halten beibehalten werden. An dem Schwenkgriff, der für die manuelle Herbeiführung dergenannten Stellungen verantwortlich ist, greift ein einfach wirkender pneumatischer Zylinder an, der durch elektrische Ansteuerung eines Elektroventils ein- und ausgefahren werden kann. Erkennt eine Erfassungseinrichtung ein Ende eines Be- oder Entladevorgangs des Fahrzeugs, beispielsweise auf Grundlage eines ABS-Sensors oder eines Schließens der Türen, wird der Zylinder betätigt, womit eine Rückführung des Schwenkhebels aus der Stellung 'Tief' oder 'Hoch' in die Stellung "Normal" einhergeht.

Auch WO 92/12021 offenbart ein pneumatisches Schaltventil mit axial hintereinander liegenden Stellungen Senken, Stopp, Heben und Fahrt Abweichend zu FR 2 733 942 erfolgt eine automatische Bewegung aus einer Stellung Heben oder Senken nicht durch einen extern von dem Schaltventil angeordneten pneumatischen Zylinder. Vielmehr besitzt das Schattventil einen pneumatischen Steueränschluss, mit dessen Druckbeaufschlagung das Schaltventil in die Stellung Fahrt verbracht werden kann. Die Beaufschlagung des Steueranschlusses erfolgt beispielsweise auf Grundlage eines elektrischen Signales, welches erzeugt wird mit Bewegung der Fahrzeugräder oder mit dem Betrieb der Fahrzeugbremse.

Weiterer Stand der Technik ist aus EP-A-0188 706 sowie WO 91/07291 A bekannt.

### AUFGABE DER ERFINDUNG

Aufgabe der vorliegenden Erfindung ist es, eine Verwendung eines pneumatischen Schaltventils mit einer vergrößerten Betriebs- oder Transportsicherheit und/oder einem erhöhten Bedienkomfort vorzuschlagen.

### LÖSUNG

Die der Erfindung zugrunde liegende Aufgabe wird gelöst durch die Merkmale des unabhängigen Patentanspruchs 1.

### BESCHREIBUNG DER ERFINDUNG

Der eingangs beschriebene Stand der Technik beruht auf dem Grundsatz, dass für manuell betätigbare pneumatische Schaltventile
- von einem Benutzer oder Fahrer eine Stellung HEBEN und/oder SENKEN manuell gehalten (DE 41 20 824 C1, DE 101 29 143 C1)) oder
- diese Stellungen manuell gelöst (DE 26 23 235 C3).
werden muss/müssen. Im Gegensatz hierzu beruht die vorliegende Erfindung auf der Erkenntnis, dass, zumindest in ausgewählten Betriebsbereichen, eine Verriegelung oder Rastierung des Steuerelements in der Stellung HEBEN von Vorteil sein kann. Mit einer derartigen Verriegelung muss der Benutzer für länger andauernde Vorgänge HEBEN das Bedienelement nicht dauerhaft betätigen. Vielmehr verbleibt das Steuerelement infolge des Verriegelungselements oder Rastierelements automatisiert in der Stellung HEBEN. Dies bedeutet, dass für die verriegelte Stellung HEBEN der Fahrer noch während einer Änderung des Befüllungszustands eines Luftfederelements weitere Arbeiten verrichten kann. Für ein gewünschtes Ende des Vorgangs HEBEN kann der Benutzer das Rastierelement oder Verriegelungselement manuell lösen. Mit dem Lösen des Rastierelements oder Verriegelungselements erfolgt automatisiert eine Bewegung in die Stellung NEUTRAL, bspw. veranlasst durch eine Torsionsfeder oder exzentrische federbelastete Stößel gemäß dem eingangs genannten Stand der Technik oder durch eine geeignete Druckbeäufschlagung. Alternativ kann die Verriegetungs- oder Rastiereinheit automatisiert gelöst werden. Auch für eine Indikation einer Fahrsituation oder alternativ als "Defauft"-Lösung erfolgt eine automatische Verstellung in die Stellung NEUTRAL oder FAHRT. Diese Verstellung kann automatisiert aus einer Verriegelung für HEBEN erfolgen und/oder lediglich in einer automatisierten Überführung von einer Stellung NEUTRAL in die Stellung FAHRT bestehen. Beispielsweise ist in der Stellung NEUTRAL eine Verbindung zu einem Luftfederelement geschlossen oder sind Luftfederelemente zweier Luftfederkreise kurzgeschlossen, während in der Stellung FAHRT das Luftfederelement mit einem Sperrventil oder einem Niveauregelventil verbunden sein kann. Für ein gewünschtes Anheben im Bereich einer Rampe kann es von Vorteil sein, wenn während eines Anhebens, und u. U. auch während eines anschließenden Be- und Entladevorgangs über die Rampe, das Steuerelement in der Stellung HEBEN verriegelt wird, so dass das Luftfederelement ständig mit Druckluft beaufschlagt ist. Erfindungsgemäß erfolgt eine Verwendung des Schaltventils für eine Anlage zum Heben und Senken eines Fahrzeugaufbaus von luftgelederten Fahrzeugen mit einem automatischen Lösen der Verriegelungs einheit in der Stellung HEBEN mit indikation einer Fabrikation.

Unter einer *Rasdereinheit* wird im Sinne der Erfindung insbesondere eine Einheit verstanden, welche formschlüssig eine Position des Steuerelements sichert und bei der der zuvor genannte Formschluss unter elastischer Verformung eines Rastierelements oder unter elastischem Nachgeben einer Abstützung eines Rastierelements gelöst werden kann. Für eine Auslegung einer minimalen Rastierkraft der Rastiereinheit sind insbesondere folgende Auslegungskriterien zu berücksichtigen:
- Für eine Rückstellung von der Stellung 'SENKEN' in die Stellung "NEUTRAL" kann eine Torsionsfeder verantwortlich sein. Das Kraftniveau derTorsionsfeder in der Stellung "SENKEN" gibt eine Untergrenze für eine Kraft vor, der das Verriegelungselement oder das Rastierelement ausgesetzt wird.
- Eine weitere, u. U. eine Rückstellung aus der Stellung "SENKEN" bewirkende Kraft kann durch einen Stößel, beispielsweise des Einlassventils oder Auslassventils, erzeugt werden, die beabstandet zur Längsachse des Steuerelements auf das Steuerelement wirkt und somit ein Rückstellmoment erzeugt, welches von dem Rastierelement aufgenommen werden muss.
- Entsprechendes gilt für abweichende Rückstelleinrichtungen, insbesondere eine pneumatische Rückstellung.

Unter einer *Verriegelungseinheit* wird insbesondere eine Einheit verstanden, bei der die Position des Steuerelements über einen Förmschluss mit einem Verriegelungselement gesichert wird und der Formschluss über eine Bewegung des Verriegelungselements gelöst wird. Damit wird eine Verriegtungseinheit vorzugsweise durch Betätigung des Verriegelungselements quer zum Steuerelement betätigt, während eine Rastiereinheit auch mit Aufbringung von Kräften in Längsrichtung des Steuerelements lösbar ist. Selbstverständlich sind auch abweichende Rastier- oder Verriegelungseinheiten möglich.

Vorteilhafte Weiterbildungen der Erfindung ergeben sich aus der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein manuell betätigbares pneumatisches Schaltventil in schematischer Darstellung bei Integration in eine Anlage zum Heben und Senken eines Fahrzeugaufbaus mit Luftfederelementen.
- **Fig. 2**: zeigt unterschiedliche Freiheitsgrade eines Steuerelements eines Schaltventils in schematischer Darstellung.
- **Fig. 3**: zeigt eine konstruktive Ausgestaltung eines Schaltventils mit einer als Rastkugel ausgebildeten Verriegelungs- oder Rastiereinheit in einem Längsschnitt
- **Fig. 4**: zeigt eine alternative Ausgestaltung eines Schaltventils im Längsschnitt in einer Betriebsstellung FAHRT.
- **Fig. 5**: zeigt das Schaltventil gemäß Fig. 4 in einer Stellung STOP.
- **Fig. 6**: zeigt das Schaltventil gemäß Fig. 4 und 5 in einer Stellung VERRIEGELT.
- **Fig. 7**: zeigt das Schaltventil gemäß Fig. 4-6 in einem Querschnitt VII-VII in einer Axial- stellung STOP gemäß Fig. 5 und einer Schwenkstellung NEUTRAL.
- **Fig. 8**: zeigt das Schaltventil gemäß Fig. 4-7 in einem Fig. 7 entsprechenden Quer- schnitt VIII-VIII, allerdings in einer Schwenkstellung SENKEN.
- **Fig. 9**: zeigt das Schaltventil gemäß Fig. 4-8 in einem Schnitt IX-IX in einer Schwenk- stellung SENKEN und einer Axialstellung VERRIEGELT.
- **Fig. 10**: zeigt eine alternative Ausgestaltung eines Schaltventils in einem Teil- Längsschnitt mit einem Verriegelungsstift.
- **Fig. 11**: zeigt das Schaltventil gemäß Fig. 10 in einem Querschnitt XI-XI in einerverriegelten Stellung SENKEN.
- **Fig. 12**: zeigt eine weitere Ausgestaltungsform eines Schaltventils in einem Teil- Längsschnitt mit einer manuell betätigbaren Verriegelungseinheit.

### FIGURENBESCHREIBUNG

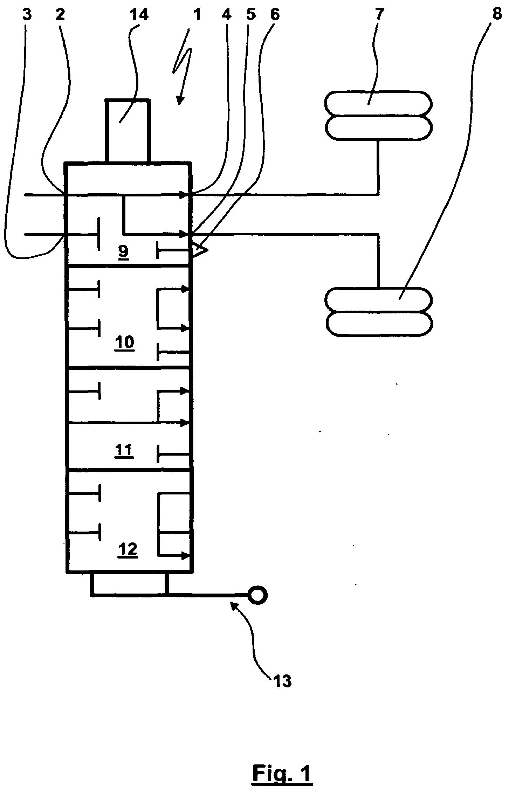

**Fig.1** zeigt ein Schaltventil 1, wie dieses für ein Fahrzeug, insbesondere ein Nutzfahrzeug, ein Zugfahrzeug oder einen Anhänger, zum Einsatz kommen kann. Das Schaltventil 1 ist an eine Luftfederanlage des Fahrzeugs integriert, beispielsweise entsprechend DE 101 29 143 C1.

Das Schaltventil besitzt Anschlüsse 2-6, die je nach Stellungen des Schaltventils 1 geeignet miteinander verbunden werden können. Beispielsweise ist Anschluss 2 mit einem Niveauregelventil verbunden, Anschluss 3 mit einer Druckluftversorgung, Anschlüsse 4 und 5 mit Luftfederelementen 7,8 sowie Anschluss 6 mit einer Drucksenke oder Entlüftung.

Das Schaltventil 1 beisitzt Stellungen FAHRT 9, STOP 10, HEBEN 11 und SENKEN 12. In der skizzierten Stellung FAHRT 9 ist der Anschluss 2 mit den Anschlüssen 4 und 5 verbunden, so dass bspw. in der Stellung FAHRT 9 das Niveauregelventil pneumatisch mit den Luftfederelementen 7,8 verbunden ist. In die Verbindung in dem Schaltventil können Drosseln entsprechend DE 101 29 143 C1 integriert sein. In der Stellung STOP 10 sind in dem Schaltventil 1 lediglich die Anschlüsse 4 und 5 miteinander verbunden, was zur Folge hat, dass über das Schaltventil 1 die Luftfederelemente 7,8 miteinander verbunden sind, ggf. ebenfalls unter Zwischenschaltung einer Drosselwirkung. In der Stellung HEBEN 11 ist der Anschluss 3 über das Schaltventil 1 mit den Anschlüssen 4,5 verbunden, so dass bspw. eine Druckluftversorgung, ggf. unter Zwischenschaltung einer Drosselwirkung, pneumatisch mit den Luftfederelementen 7, 8 verbunden ist und der Druck in den Luftfederelementen 7, 8 bei ausreichendem Druckgefälle zwischen Luftfederelementen 7, 8 und Druckluftversorgung angehoben werden kann, was mit einem Anheben des Fahrzeugaufbaus einhergeht. In der Stellung SENKEN 12 sind die Anschlüsse 4, 5 mit dem Anschluss 6 verbunden, was mit einer Entlüftung der Luftfederelemente 7, 8 korrespondiert.

Eine manuelle Betätigung des Schaltventils 1 ist überein manuelles Bedienelement 13 möglich, wobei weiterhin ein Stellelement 14, insbesondere eine Feder, ein pneumatisches Element oder ein elektrischer Aktuator, ebenfalls permanent oder temporär nach Maßgabe einer einer Steuereinrichtung auf das Schaltventil 1 einwirken kann.

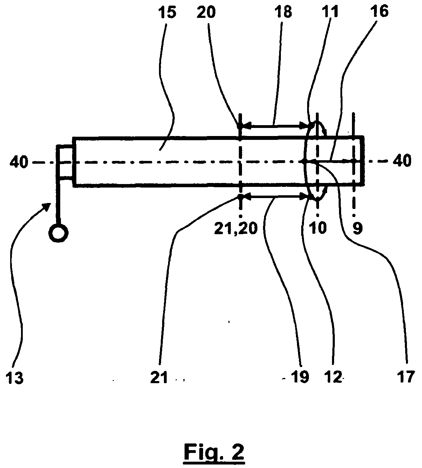

In **Fig. 2** ist schematisch ein Steuerelement 15 des Schaltventils 1 dargestellt, bei dem es sich um einen Steuerkolben handeln kann, der im Bereich seiner Mantelfläche mit in Fig. 2 nicht dargestellten Steuerflächen oder Steuerkanten mit pneumatischen Übertrittsquerschnitten oder Ventilen zusammenwirkt, wodurch die zuvor erläuterten Schaltzustände des Schaltventils 1 ermöglicht sind. Das Steuerelement 15 steht zur automatisierten und/oder manuellen Betätigung in Wirkverbindung sowohl mit dem Bedienelement 13 als auch mit dem Stellelement 14. Das Steuerelement 15 besitzt zwei Freiheitsgrade, nämlich einen Verschiebe-Freiheitsgrad in Richtung seiner Längsachse 40-40 sowie einen Verschwenk-Freiheitsgrad um die Längsachse 40-40. In der Axialstellung FAHRT 9 kann das Steuerelement 15 ebenfalls verschwenkbar sein, wobei allerdings vorzugsweise der Verschwenk-Freiheitsgrad in der Stellung FAHRT 9 behindert ist. Über eine Längsverschiebung 16 kann das Steuerelement 15 von der Stellung FAHRT 9 in die Stellung STOP 10 verbracht werden. In dieser Stellung STOP 10 besitzt das Steuerelement 15 den Verschwenk-Freiheitsgrad, in dem drei Verschwenkstellungen HEBEN 11, SENKEN 12 sowie eine Stellung NEUTRAL 17 zwischen den Stellungen HEBEN 11 und SENKEN 12 existieren.

Vorzugsweise ist mindestens ein Anschlag vorgesehen, der eine Verschwenkung des Steuerelements 15 Ober die Stellung HEBEN 11 und/oder SENKEN 12 hinaus vermeidet. In einer der Stellungen HEBEN 11 oder SENKEN 12 oder in beiden vorgenannten Stellungen kann das Steuerelement 15 über eine weitere Längsverschiebung 18, 19 in eine Stellung VERRIEGELT 20, 21 verschoben werden, in der zumindest ein Verschwenk-Freiheitsgrad des Steuerelements 15 zurück in Richtung NEUTRAL behindert ist In alternativer, vereinfachter Ausgestaltung entfällt die Möglichkeit einer Längsverschiebung 18,19, und eine Verriegelung erfolgt in den Stellungen HEBEN 11 und/oder SENKEN 12. In Abwandlung zu der in Fig. 2 dargestellten schematischen Ausführungsform kann ein Wechsel von der Stellung FAHRT 9 zu Stellung STOP 10 sowie eine Verriegelungsbewegung über einen Verschwenk-Freiheitsgrad realisiert werden, während eine Realisierung der Stellungen HEBEN 11, SENKEN 12 und VERRIEGELT 20, 21 über einen Axial-Freiheitsgrad realisiert sein kann. Weiterhin ist es möglich, dass die Längsverschiebungen 18,19 nichtvon der Längsverschiebung 16weg erfolgen, sondern vielmehr für eine Bewegung in Richtung der Stellungen VERRIEGELT 20, 21 eine Bewegung erfolgt, die gegenläufig ist zur Bewegung von der Stellung FAHRT 9 zur Stellung STOP 10.

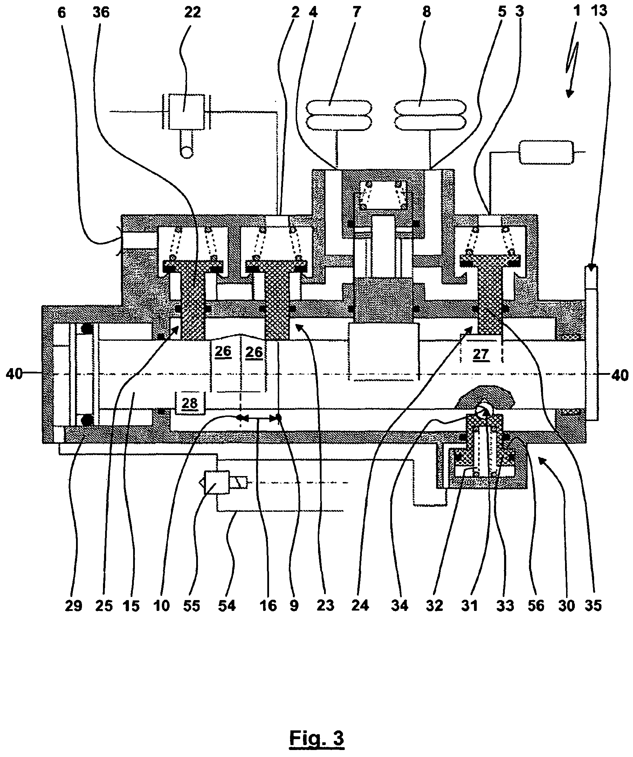

**Fig. 3** zeigt eine konstruktive Ausgestaltung eines Schaltventils 1 in einem Längsschnitt in einer Stellung HEBEN 11. Bei dem Schaltventil ist an den Anschluss 2 ein Niveauregelventil 22 angeschlossen. Den Anschlüssen 2, 3, 6 sind in der vorgenannten Reihenfolge Ventile 23, 24, 25 in Stößetbauart mit Federbeaufschlagung zugeordnet, die jeweils in Öffnungsstellung, in der die zugeordneten Federn verstärkt beaufschlagt sind, eine Verbindung des zugeordneten Anschlusses mit den Anschlüssen 4, 5 und damit den Luftfederelementen 7, 8 schaffen. Das Steuerelement 15 besitzt eine Steuerfläche 26, die in der (nicht dargestellten) Stellung FAHRT 9 das Ventil 23 öffnet, so dass die Luftfederelemente 7,8 mit dem Niveauregelventil 22 verbunden sind. Weiterhin besitzt das Steuerelement 15 Steuernocken 27, 28, die in der skizzierten Axialstellung STOP 10 zur Wirkung kommen können, wobei der Steuemocken 27 in der skizzierten Schwenkstellung HEBEN 11 das Ventil 24 öffnet, während der Steuemocken 28 in gegenüber Fig. 3 veränderter Schwenkstellung SENKEN 12 das Ventil 25 öffnet. In der dargestellten Stellung HEBEN 11 ist das Steuerelement 15 gegenüber einem Gehäuse 29 des Schaltventils 1 über eine Verriegelungseinheit 30 verriegelt. Hierzu besitzt die Verriegelungseinheit 30 eine Verriegelungs- oder Rastkugel 31, die beaufschlagt durch eine Feder 32, die sich rückwärtig an dem Gehäuse 29 abstützt, und unter Zwischenschaltung eines Druckstücks 33 in eine Ausnehmung 34 des Steuerelements 15 gedrückt wird. Über die Gestaltung der Kontur der Ausnehmung 34 in dem dargestellten Längsschnitt können die Kräfte für ein Lösen der Verriegelungseinheit 30 oder Rastiereinheit mit einer manuellen oder pneumatischen oder elektrischen Beaufschlagung des Steuerelements 15 in Richtung der Längsachse 40-40 vorgegeben werden. Über die Gestaltung der Ausnehmung 34 in Umfangsrichtung kann die Größe eines ggf. zugelassenen Schwenkwinkels für wirksame Verriegelungseinheit 30 vorgegeben werden. Vorzugsweise beträgt der zugelassene Schwenkwinkel jedoch ungefähr Null.

Fig. 3 zeigt weiterhin eine Druckleitung 54, die über ein gemeinsames elektrisches Schaltventil 55 zum einen mit einer Steuerfläche 42 des Steuerelements 15 verbindbar ist, über deren Beaufschlagung eine Bewegung von der Stellung STOP 10 zur Stellung FAHRT 9 veranlasst werden kann, und zum anderen eine Steuerfläche 56 eines Druckstücks 33 beaufschlagt werden kann, über die die Verriegelungseinheit 30 gelöst werden kann.

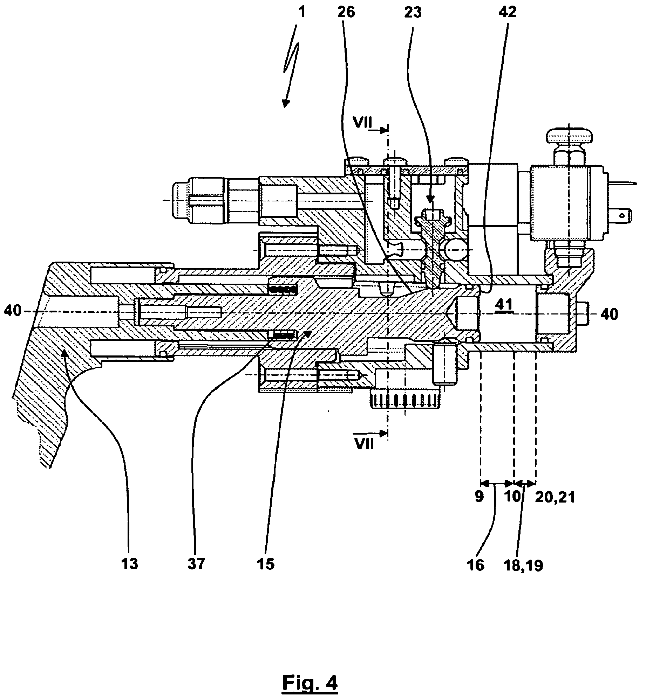

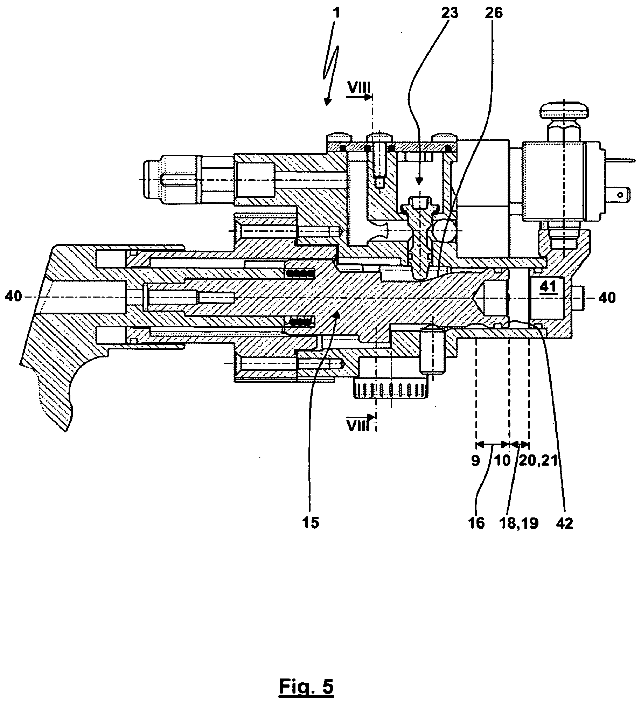

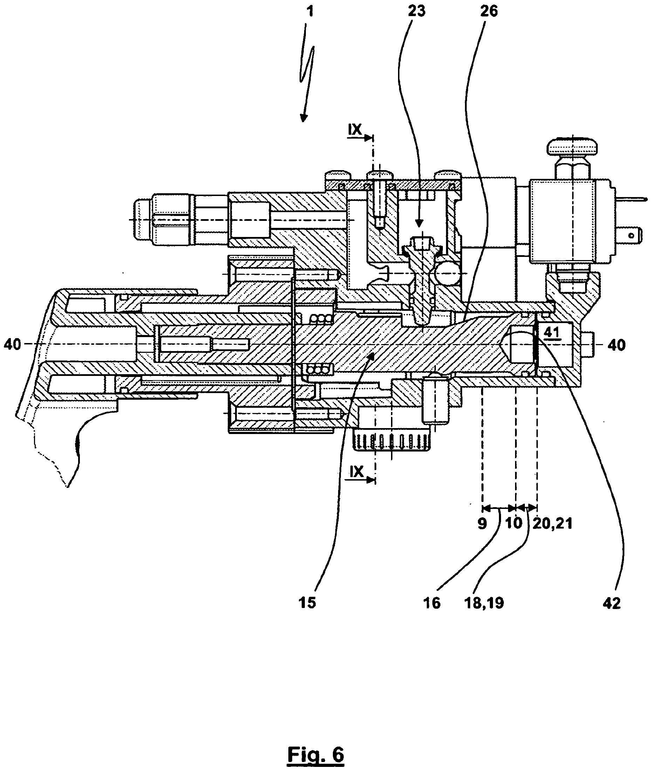

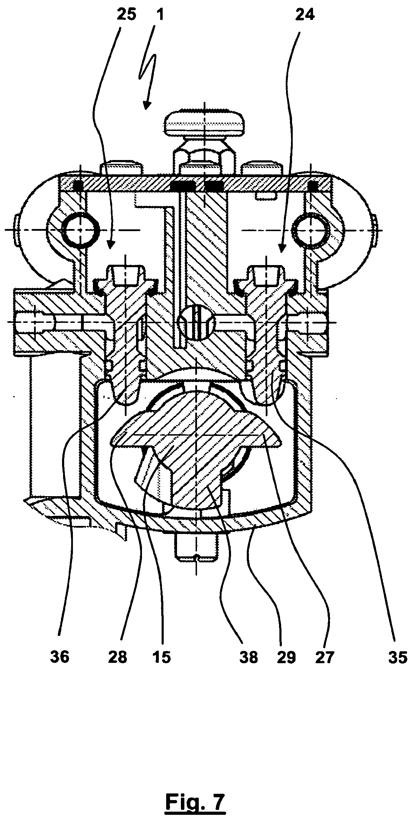

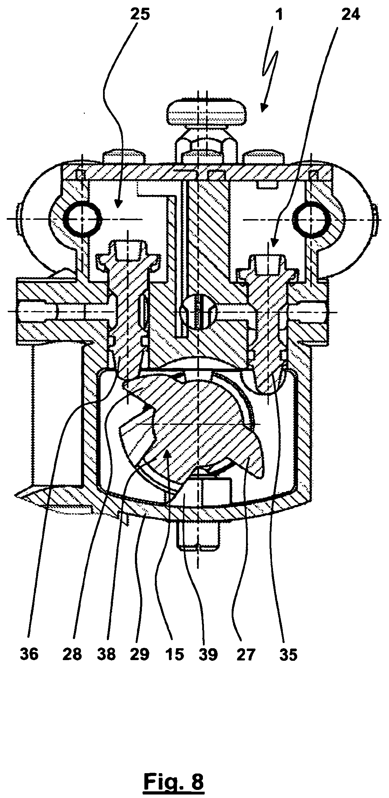

In den Fig. 4-6 ist in einem Längsschnitt eine weitere Ausgestaltungsform eines erfindungsgemäßen Schaltventils 1 dargestellt, wobei in Fig. 4 das Schaltventil 1 in einer Stellung FAHRT 9, in Fig. 5 in einer Stellung STOP 10 sowie in Fig. 6 in einer Stellung VERRIEGELT 20 (21) dargestellt ist. In den Fig. 4-6 ist zu erkennen, dass das Öffnen und Schließen des Ventils 23 durch die Axialbewegung zwischen STOP 10 und FAHRT 9 des Steuerelements 15 mit der den Stößel des Ventils 23 kontaktierenden Steuerfläche 26 gesteuert wird. In dem Schnitt VII-VII gemäß **Fig. 7** ist ersichtlich, dass In der Stellung FAHRT gemäß Fig. 4 und 7 Stößel 35, 36 der Ventile 24, 25 nicht in Wirkverbindung treten mit Steuernocken 27, 28 des Steuerelements 15. Hingegen kann in der Axialstellung STOP 10 gemäß Fig. 5 das Steuerelement 15 von einer Mittenstellung NEUTRAL 17 in die in **Fig. 8** dargestellte Stellung SENKEN verschwenkt werden, so dass der Steuemocken 28 den Stößel 36 des Ventils 25 betätigt, so dass das Ventil 25 öffnet. Wird über das Bedienelements 13 kein hinreichendes Moment auf das Steuerelement 15 aufgebracht, so kann das Steuerelement 15 aus der in Fig. 8 dargestellten Stellung SENKEN 12 infolge einer Torsionsfeder 37 zurück in die Stellung NEUTRAL 17 schwenken.

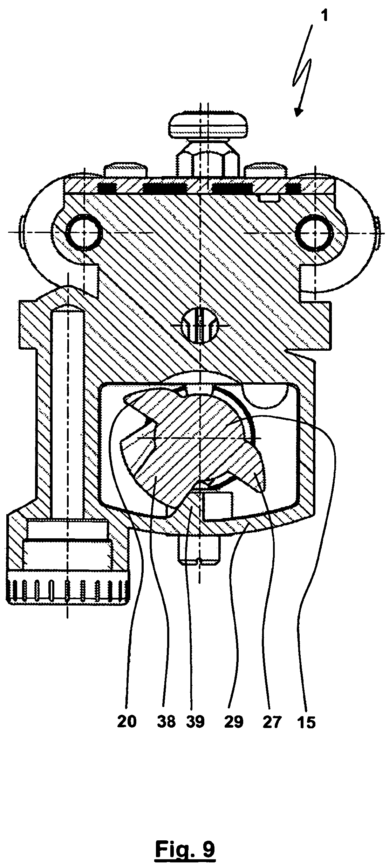

Allerdings kann gemäß **Fig. 6** **und** **9** das Steuerelement 15 über eine Längsverschiebung 19 aus der Stellung SENKEN 12 in die Stellung VERRIEGELT 21 überführt werden. In dieser Stellung liegt ein radial auswärts orientierter Zapfen 38 an einem Anschlag 39 des Gehäuses 29 an, so dass eine Rückverschwenkung des Steuerelements 15 vermieden ist. Für die Längsver- _ schiebung 19 gleitet der Stößel 36 ohne maßgebliche Veränderung des Zustands des Ventils 25 in Richtung der Längsachse 40-40 entlang dem Steuernocken 28. Gleichzeitig bewegt sich der Zapfen 38 gleitend gegenüber dem Anschlag 39, wobei eine geeignete Einführschräge vorgesehen sein kann. Eine entsprechende Zapfen 38-Anschlag 39-Baugruppe kann zur Verriegelung ausgehend von der Stellung HEBEN 11 vorgesehen sein.

Zur automatisierten Entriegelung ist ein Druckraum 41 vorgesehen, über den eine stirnseitige Steuerfläche 42 des Steuerkolbens beaufschlagt werden kann und eine Verschiebung von der Stellung VERRIEGELT 21 (20) zur Stellung STOP 10 und ggf. nach einer Rückverstellung in die Stellung NEUTRAL 17 über die Torsionsfeder 37 eine weitere Verschiebung in Richtung der Stellung FAHRT 9 herbeigeführt werden kann.

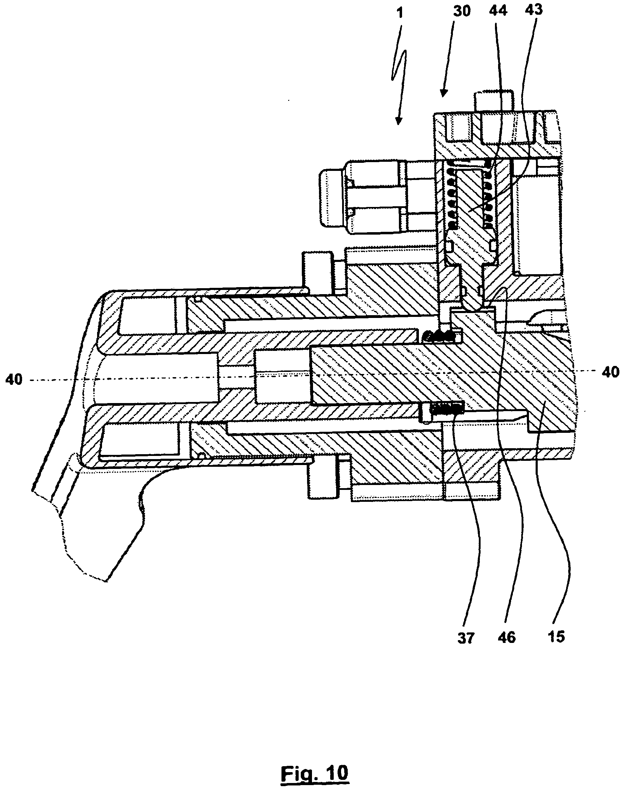

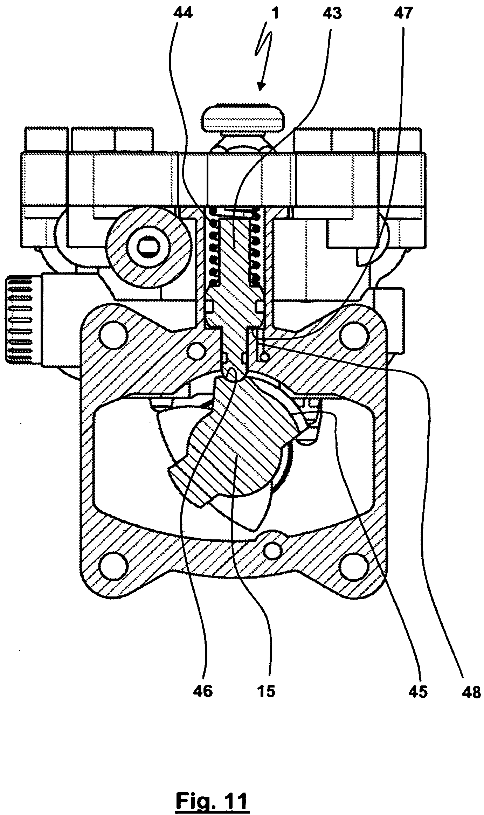

**Fig. 10** zeigt eine alternative Ausgestaltung der Erfindung, bei dereine Verriegelung in einer Stellung HEBEN 11 oder SENKEN 12 über einen Verriegelungsstift 43 herbeigeführt werden kann. Hierbei ist es möglich, dass der Verriegelungsstift 43 entweder in einer Axialstellung STOP 10 zur Wirkung kommt, so dass eine weitere Längsverschiebung 18, 19 nicht möglich ist, oder aber erst nach einer weiteren Längsverschiebung 18, 19 in einer Axialstellung VERRIEGELT 20, 21. Füreine Verriegelung in der Axialstellung STOP 10 gleitet der über eine Feder 44 in Richtung des Steuerelements 15 beaufschlagte Verriegelungsstift 43 entlang einer Mantelfläche 45, bis die abgerundete Stimfläche des Verriegelungsstifts 43 Aufnahme findet in einer Ausnehmung oder Nut 46 des Steuerelements 15, s. **Fig. 11****.**

Der Verriegelungsstift 43 besitzt eine Steuerfläche 47, die über eine Leitung 48 mit einem Entriegelungsdruck beaufschlagbar ist, über den unter zunehmender Beaufschlagung der Feder 44 der Verriegelungsstift 43 von dem Steuerelement 15 weg bewegt werden kann. In einer derartigen entriegelten Stellung kann über die Torsionsfeder 37 eine Rückstellung des Steuerelements 15 von einer Stellung HEBEN 11 oder SENKEN 12 in Richtung der Stellung NEUTRAL 17 erfolgen. Für den Fall, dass der Verriegelungsstift 43 in einer zusätzlichen Ebene VERRIEGELT 20, 21 wirksam wird, kann über eine Beaufschlagung des Druckraums 41 eine Längsverschiebung 18 erzeugt werden. Der Entriegelungsdruck in der Leitung 48 sowie der Druck in dem Druckraum 41 kann über ein gemeinsames Ventil freigegeben werden oder über separate Ventile, u. U. zeitversetzt

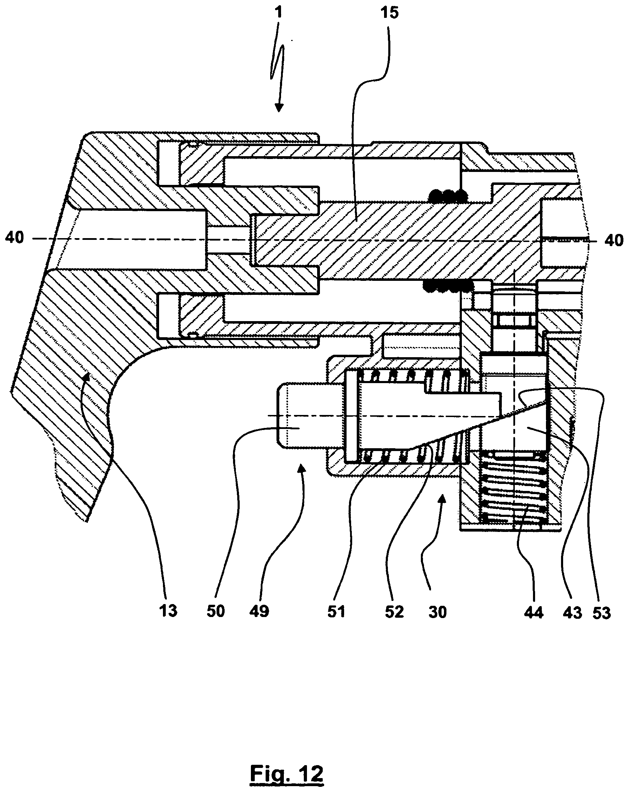

**Fig. 12** zeigt eine weitere Ausgestaltung eines Schaltventils 1 mit einer Verriegelungseinheit 30, die ebenfalls über einen Verriegelungsstift 43 verfügt, der über eine Feder 44 in Richtung des Steuerelements 15 beaufschlagt ist und in einer verriegelten Stellung HEBEN 11 oder SENKEN 12 formschlüssig in Umfangsrichtung des Steuerelements 15 mit dem Steuerelement 15 in Wirkverbindung tritt. Ein Lösen der Verriegelungseinheit 30 erfolgt in diesem Fall alternativ oder kumulativ zu einem Lösen über einen Entriegelungsdruck in einer Leitung 48 über einweiteres Bedienelement 49. Das weitere Bedienelement 49 besitzt einen Betätigungsknopf 50, der über eine Feder 51 von dem Verriegelungsstift 43 weggedrückt wird. Fürden Fall, dass von einem Benutzer der Betätigungsknopf 50 in Richtung des Verriegelungs-stifts 43 und unterzunehmender Beaufschlagung der Feder 51 betätigt wird, gleitet eine abgeschrägte Stirnfläche 52, die sowohl gegenüber der Betätigungsachse des Betätigungskopfs 50 als auch gegenüber der Längsachse des Verriegelungsstifts 43 einen spitzen Winkel bildet, entlang einer entsprechend abgeschrägten Anlagefläche 53 des Verriegelungsstifts 43, was mit einer Bewegung des Verriegelungsstifts 43 von dem Steuerelement 15 weg einhergeht, wodurch sich der Verriegelungsstift 43 in eine gelöste Stellung begibt Somit ist eine Bewegung des Steuerelements 15 aus der Stellung HEBEN 11 oder SENKEN 12 möglich.

In entsprechender Ausgestaltung ist der Einsatz einer oder mehrerer Verriegelungs- oder Rastiereinheit(en) für ein Schaltventil für mehrere Luftfederkreise entsprechend dem eingangs genannten Stand der Technik möglich.

### BEZUGSZEICHENLISTE

- 1: Schaltventil
- 2: Anschluss
- 3: Anschluss
- 4: Anschluss
- 5: Anschluss
- 6: Anschluss
- 7: Luftfederelement
- 8: Luftfederelement
- 9: FAHRT
- 10: STOP
- 11: HEBEN
- 12: SENKEN
- 13: Bedienelement
- 14: Stellelement
- 15: Steuerelement
- 16: Längsverschiebung
- 17: NEUTRAL
- 18: Längsverschiebung
- 19: Längsverschiebung
- 20: VERRIEGELT
- 21: VERRIEGELT
- 22: Niveauregelventil
- 23: Ventil
- 24: Ventil
- 25: Ventil
- 26: Steuerfläche
- 27: Steuemocken
- 28: Steuemocken
- 29: Gehäuse
- 30: Verriegelungseinheit
- 31: Rastkugel
- 32: Feder
- 33: Druckstück
- 34: Ausnehmung
- 35: Stößel
- 36: Stößel
- 37: Torsionsfeder
- 38: Zapfen
- 39: Anschlag
- 40: Längsachse
- 41: Druckraum
- 42: Steuerfläche
- 43: Verriegelungsstift
- 44: Feder
- 45: Mantelfläche
- 46: Nut
- 47: Steuerfläche
- 48: Leitung
- 49: weiteres Bedienelement
- 50: Betätigungsknopf
- 51: Feder
- 52: Stirnfläche
- 53: Anlagefläche
- 54: Druckleitung
- 55: elektrisches Schaltventil
- 56: Steuerfläche

## Patentansprüche

1. Verwendung
a) eines manuell betätigbaren pneumatischen Schaltventils (1) für Anlagen zum Heben und Senken eines mindestens ein Luftfederelement (7; 8) aufweisenden Fahrzeugaufbaus mit einem Steuerelement (15) mit einem manuell betätigbaren Bedienelement (13), wobei das Steuerelement (15) Stellungen HEBEN (11), SENKEN (12), NEUTRAL (17) und FAHRT (9) aufweist und je nach der Stellung des Steuerelements (15) ein Einlassventil oder ein Auslassventil zum Heben und Senken betätigbar ist, wobei die Stellung HEBEN (11) über eine Verriegelungseinheit (30) sicherbar ist, wobei ein automatisches Lösen der Verriegelungseinheit (30) in der Stellung HEBEN (11) mit Indikation einer Fahrsituation möglich ist, wobei bei einem automatischen Lösen der Verriegelungseinheit (30) in der Stellung HEBEN (11) mit Indikation einer Fahrsituation veranlasst durch eine Torsionsfeder ein selbsttätiges Rückstellen des Steuerelements (15) aus der Stellung HEBEN (11) in die Stellung NEUTRAL (17) oder FAHRT (9) erfolgt,
b) für eine Anlage zum Heben und Senken eines Fahrzeugaufbaus von luftgefederten Fahrzeugen mit einem automatischen Lösen der Verriegelungseinheit (30) in der Stellung HEBEN (11) mit Indikation einer Fahrsituation.

## Claims

1. Use
a) of a manually operable pneumatical switching valve (1) for systems for lifting and lowering a vehicle assembly comprising at least one air spring element (7; 8) having a control element (15) with a manually operable manipulation element (13), wherein the control element (15) comprises states LIFTING (11), LOWERING (12), NEUTRAL (17) and DRIVE (9) and an inlet valve or an outlet valve is operable or operated in dependence on the state of the control element (15), the state LIFTING (11) being securable by means of a resting unit or locking unit (30), wherein an automatic deactivation of the locking unit (30) or resting unit in the state LIFTING (11) being allowed with the indication of a drive situation, wherein upon automatic deactivation of the resting unit or locking unit (30) in the state LIFTING (11) with the indication of a drive situation the control element (15) is automatically returned from the state LIFTING (11) into the state NEUTRAL (17) or DRIVE (9) by a torsional spring
b) for a system for lifting and lowering a vehicle assembly of air spring suspended vehicles with automatic deactivation of the resting unit or locking unit (30) in the state LIFTING (11) with the indication of a drive situation.

## Revendications

1. Utilisation
a) d'une vanne de commande (1) pneumatique, actionnable manuellement, pour des dispositifs destinés à lever et abaisser une carrosserie de véhicule automobile munie d'au moins un élément de suspension pneumatique (7; 8), comportant un élément de commande (15) avec un élément d'actionnement (13) actionnable manuellement, ledit élément de commande (15) possédant des positions LEVAGE (11), ABAISSEMENT (12), NEUTRE (17) et ROUTE (9), et conformément à la position de l'élément de commande (15), une vanne d'admission ou une vanne d'évacuation pouvant être actionnée pour le levage ou l'abaissement, la position LEVAGE (11) pouvant être bloquée par une unité de verrouillage (30), une désolidarisation automatique de l'unité de verrouillage (30) étant possible dans la position LEVAGE (11) avec indication d'une situation de route, dans laquelle, lors d'une désolidarisation automatique de l'unité de verrouillage (30) dans la position LEVAGE (11) avec indication d'une situation de route, induite par un ressort de torsion, il se produit un rappel automatique de l'élément de commande (15) hors de la position LEVAGE (11) dans la position NEUTRE (17) ou la position ROUTE (9),
b) pour un dispositif destiné à lever et abaisser une carrosserie de véhicule, de véhicule automobile à suspension pneumatique, avec une désolidarisation automatique de l'unité de verrouillage (30) dans la position LEVAGE (11) avec indication d'une situation de route.
